# EUROPEAN PATENT SPECIFICATION

(11) **EP 0 679 672 B1**
(45) Date of publication and mention of the grant of the patent: **01.07.1998**
(21) Application number: 94303121.1
(22) Date of filing: 28.04.1994
(51) Int. Cl.: C08G 63/688

(54) **Process for the preparation of modified polybutylene terephthalate resin**
Verfahren zur Herstellung eines modifizierten Polybutylenterephthalatharzes
Procédé de préparation d'une résine de polybutylène téréphtalate modifiée

(43) Date of publication of application: 02.11.1995
(73) Proprietor: POLYPLASTICS CO. LTD., Chuo-Ku Osaka-shi Osaka 541 (JP)
(72) Inventor: Kawaguchi, Kuniaki, Numazu-shi, Shizuoka (JP); Hijikata, Kenji, Mishima-shi, Shizuoka (JP); Nakane, Toshio, Fuji-shi, Shizuoka (JP)
(74) Representative: Jackson, Peter

(56) References cited:
- EP-A- 0 280 026
- DATABASE WPI Week 7226, Derwent Publications Ltd., London, GB; AN 72-42209T & JP-B-47 022 334 (UNITIKA LTD) June 1972

## Description

### [Field of the Invention]

This invention relates to a process for the preparation of a stable modified polybutylene terephthalate resin which little generates gas such as tetrahydrofuran even in high-temperature service and little gives sublimate in melt-processing and a molded article made from a modified polybutylene terephthalate resin prepared by this process or a composition containing the resin.

### [Description of the Related Art]

Polybutylene terephthalate (hereinafter sometimes referred to simply as PBT) has been widely applied to various uses including automobiles and electric and electronic equipments as an engineering plastic, since it is excellent in mechanical, electrical, chemical and physical properties as a crystalline thermoplastic resin. Further, PBT is excellent in the ability to retain a smell as well as in gas (for example, steam) barrier properties, which makes it highly useful in the field of packaging as, for example, containers for food and cosmetics and packaging films.

However PBT has a disadvantage in mold processing. Namely, when heated in a molten state, it is decomposed to generate gas and give sublimate, which causes the formation of voids in molded articles or adhesion to molding devices such as mold and roll to thereby induce contamination or corrosion. In a practical production process, molding of a resin is often conducted not continuously but intermittently. In such a case, the prolonged residence of the molten resin in a molding machine brings about serious problems of the generation of gas and sublimate. Thus it has been required to solve these problems.

In addition, the molded articles made from the PBT resin generate gas such as tetrahydrofuran in high-temperature service, which causes additional problems. In the case of an electric or electronic part such as relay, switch and connector, the metal contact is contaminated or corroded thereby. In the case of a container for food, drink or cosmetic or a packaging film, an offensive odor permeates into the contents or the taste of the contents is deteriorated.

Therefore it has been also urgently required to reduce the gas generated from molded articles.

### [Summary of the Invention]

Under these requirements, the present inventors have conducted extensive studies in order to give a modified polybutylene terephthalate resin which sustains the excellent physicochemical properties of PBT resins but little generates gas such as tetrahydrofuran particularly in high-temperature service and little gives sublimate in melting, thus completing the present invention.

Accordingly, the present invention provides a process for the preparation of a modified polybutylene terephthalate resin by conducting the esterification or transesterification of an acid component comprising terephthalic acid or a lower alcohol ester thereof as the main component with a diol component comprising 1,4-butanediol as the main component and polycondensing the product of esterification or transesterification, characterized by adding 0.001 to 0.5 mole% (based on the acid component) of at least one compound represented by the following general formula (I) or (II) before the completion of the polycondensation, and a molded article made from a modified PBT resin prepared by this process or a composition containing the resin. 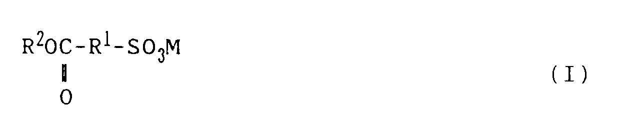 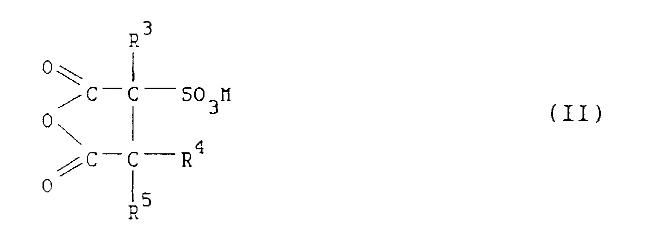 wherein R¹ is an alkylene group having 1 to 30 carbon atoms, an alkenylene group having 2 to 30 carbon atoms or a divalent group represented by the following general formula (III), which may be each an optionally branched one; R², R³, R⁴ and R⁵ may be the same or different from each other and are each one selected from among hydrogen atom and alkyl groups having 1 to 30 carbon atoms, which may be each an optionally branched one; and M is a group or element selected from among tetraalkylphosphonium, tetraalkylammonium, lithium, sodium, potassium, barium and calcium, 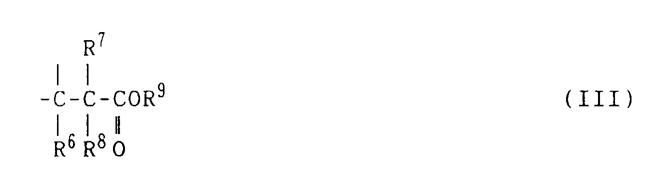 wherein R⁶, R⁷, R⁸ and R⁹ may be the same or different from each other and are each one selected from among hydrogen atom and alkyl groups having 1 to 30 carbon atoms.

### [Detailed Description of the Invention]

The modified polybutylene terephthalate according to the present invention is one having butylene terephthalate units, prepared from an acid component comprising terephthalic acid or a lower alcohol ester thereof as a main component and a diol component comprising 1,4-butanediol as a main component, as a main constituent and involves both of homopolyesters and copolyesters.

To prepare a copolyester, one or more publicly known bifunctional carboxylic acids or lower alcohol esters thereof (for example, 2,6-naphthalenedicarboxylic acid, 2,7-naphthalenedicarboxylic acid, diphenic acid, adipic acid, sebacic acid, dodecanedicarboxylic acid, 1,4-cyclohexanedicarboxylic acid or dimethyl esters thereof) can be used as an acid component comononer in addition to the main acid component as described above. Also, one or more publicly known bifunctional diols [for example, ethylene glycol, diethylene glycol, triethylene glycol, 1,3-propanediol, neopentyl glycol, 1,6-hexanediol, 1,10-decanediol, 1,4-cyclohexanediol, p-xylydene glycol, alkylene oxide adducts of hydroquinone, alkylene oxide adducts of 2,2-bis(4-hydroxy-phenyl)propane, alkylene oxide adducts of bis(4-hydroxy-phenyl) sulfone and alkylene oxide adducts of 2,6-dihydroxy-naphthalene] can be used as a diol component comonomer in addition to the main diol component as described above. Further, halogen-substituted derivatives of these materials may be used as a comonomer so as to impart flame retardancy to the resin. Furthermore, polyfunctional (trifunctional or above) compounds such as trimethyl trimesate, trimethyl trimellitate, trimethylolpropane and pentaerythritol, monofunctional compounds such as stearyl alcohol, methyl o-benzoylbenzoate and epoxy compounds, hydroxycarboxylic acid derivatives such as methyl p-hydroxyethoxybenzenecarboxylate, or polyalkylene glycol such as polypropylene glycol and polytetrahydrofuran may be used in a small amount or together with the above-mentioned comonomers. These comonomers are introduced preferably in an amount of 30 mole% or less, still preferably 20 mole% or less, based on all the repeating ester units.

The process for the preparation of a modified polybutylene terephthalate resin of the present invention is characterized by adding 0.001 to 0.5 mole% (based on the acid component) of at least one compound represented by the above general formula (I) or (II) before the completion of the polycondensation.

Particular examples of the compound represented by the above general formula (I) include tetrabutylphosphonium salts, tetrabutylammonium salts, lithium salts, sodium salts, potassium salts, barium salts and calcium salts of sulfoacetic acid, methyl sulfoacetate, 2-sulfodecanoic acid, methyl 2-sulfodecanoate, 2-sulfostearic acid, methyl 2-sulfostearate, 2-sulfopalmitic acid, methyl 2-sulfopalmitate, 2-sulfolauric acid, methyl 2-sulfolaurate, 2-sulfobehenic acid, methyl 2-sulfobehenate, 2-sulfomontanoic acid, methyl 2-sulfomontanoate, sulfosuccinic acid, dimethyl sulfosuccinate, di-2-ethylhexyl sulfosuccinate, monomethyl sulfosuccinate, α,α'-diethyl-α-sulfosuccinic acid, dimethyl α,α'-diethyl-α-sulfosuccinate and di-2-ethylhexyl α,α'-diethyl-α-sulfosuccinate.

Particular examples of the compound represented by the above general formula (II) include tetrabutylphosphonium salts, tetrabutylammonium salts, lithium salts, sodium salts, potassium salts, barium salts and calcium salts of sulfosuccinic anhydride and α,α'-diethyl-α-sulfosuccinic anhydride.

It is necessary that such an aromatic sulfonic acid compound represented by the general formula (I) or (II) be added to the monomers at an arbitrary point from the step of the preparation of the monomers to the initiation of the polycondensation. It can be added in several portions in arbitrary steps. More specifically, it is preferable that the aromatic sulfonic acid compound represented by the above general formula (I) or (II) be preliminarily added to the feedstock monomers or in the step before the substantial completion of the esterification or transesterification, in the process of the esterification or transesterification of the acid component with the diol component followed by polycondensation. Namely, it is preferable to add such a compound to the monomers prior to the addition of the reaction catalyst. Alternatively, when a lower alcohol ester of a carboxylic acid is to be used as the acid component, it is preferable to add the compound of the general formula (I) or (II) before the amount of the lower alcohol, which has been formed by the transesterification with the diol component, distilled off from the reaction system reaches 90 mole% of the theoretical amount. When a carboxylic acid is to be used as the acid component, it is preferable to add the compound of the general formula (I) or (II) before the amount of water, which has been formed by the esterification with the diol component, distilled off from the reaction system reaches 90 mole% of the theoretical amount. That is to say, more remarkable effects of suppressing the generation of gas such as tetrahydrofuran in high-temperature service of the molded article and reducing sublimate in melt-processing of the same can be obtained by adding the aromatic sulfonic acid compound in the earlier step in the process of the formation of polyester, as discussed above. In contrast, it is not preferable to blend such a compound into polymer pellets, which have been already polymerized, with the use of, for example, an extruding machine, since only deteriorated effects can be achieved in this case.

It is preferable that the aromatic sulfonic acid compound be added to the reaction system in the form of a solution or suspension in, for example, 1,4-butanediol.

The aromatic sulfonic acid compounds as described above may be added either singly or combinedly preferably in a proportion of from 0.001 to 0.5 mole%, still preferably from 0.01 to 0.3 mole%, based on the acid component monomer. When the amount of such a compound is smaller than 0.001 mole%, only poor effects of reducing gas such as tetrahydrofuran generated from a molded article in high-temperature service and reducing sublimate generated therefrom in melting can be achieved. When the amount of the compound exceeds 0.5 mole%, on the other hand, the above-mentioned effects reach equilibrium and the undissolved compound remains in the polymer as small foreign matters, which brings about undesirable phenomena such as deterioration of the appearance of a molded article or decrease in the mechanical strength of the same.

When a lower alcohol ester of terephthalic acid is to be used as the acid component in the process of the present invention, the transesterification is effected by using the lower alcohol ester of terephthalic acid and 1,4-butanediol at a molar ratio of from 1 : 1 to 1 : 2 under atmospheric pressure. To achieve a practically useful reaction rate, a catalyst such as titanium compounds, tin compounds, lead oxide, lead acetate, zinc acetate, zinc oxide and manganese acetate may be used. Among these compounds, organic titanate compounds, titanium tetrachloride compounds, hydrolyzates or alcoholyzates thereof, tin oxide, tin acetate and organotin compounds are particularly suitable therefor. Particular examples of the catalyst include titanium compounds which have been known as a catalyst for the preparation of polyester such as tetrabutyl titanate, tetrapropyl titanate, tetraethyl titanate and tetramethyl titanate and hydrolyzates thereof, hydrolyzates of titanium tetrachloride and titanium sulfate, inorganic titanium compounds such as titanium potassium fluoride, titanium zinc fluoride and titanium cobalt fluoride, titanium oxalate and titanium potassium oxalate, and/or tin compounds which have been known as a catalyst for the preparation of polyester such as dibutyltin oxide, dibutyltin acetate, dioctyltin diacetate, diphenyltin dilaurylmercaptide, polydibutyltin sebacate, dibutyltin ethylene glycolate, dioctyltin thiosalicylate, diphenyltin benzenesulfonate and dimethyltin p-toluenesulfonate. As particularly preferable examples thereof, tetrabutyl titanate, tetrapropyl titanate, hydrolyzate of titanium tetrachloride, dibutyltin oxide, dibutyltin acetate and dioctyltin diacetate may be cited.

When these titanium compounds, tin compounds or mixtures thereof are to be used as a catalyst, the catalyst is used preferably in a proportion of from 10 to 1200 ppm (based on the polymer), still preferably from 30 to 1000 ppm (based on the polymer), in terms of titanium or tin (or the sum in the case of a mixture). The catalyst may be added in several portions during the reaction, if necessary. Subsequently, the reaction temperature can be elevated up to 230°C while continuously eliminating lower alcohols, such as methanol, thus formed.

The esterification with the use of an acid component comprising terephthalic acid as a main component is effected by using from 1 to 5 mol of 1,4-butanediol per mol of terephthalic acid under atmospheric or elevated pressure. An esterification catalyst (for example, a titanium compound or a tin compound as cited above) is added and the esterification is carried out while continuously eliminating water thus formed. The catalyst may be added in several portions during the reaction, if necessary. Subsequently, the reaction temperature can be elevated up to 250°C.

To effect the polycondensation, the product obtained by the above-mentioned esterification or transesterification is subjected to melt polymerization at a temperature of 190 to 270°C under reduced pressure until the desired degree of polymerization is achieved, while continuously eliminating the excessive 1,4-butanediol and the by-products from the reaction system. As a catalyst for achieving a practically useful reaction rate in this polycondensation, those which are to be used in the above transesterification or esterification are usable as such. In order to elevate the polycondensation rate, one or more of these catalysts can be added prior to the initiation of the polycondensation. Further, publicly known stabilizers such as a sterically hindered phenol or a phosphorus compound can be added in the step of preparation of the monomers or in the step of polymerization. The aromatic sulfonic acid compound, when added in an amount as specified in the present invention, neither exerts any undesirable effects on the polycondensation rate nor inhibits the polycondensation.

The modified polybutylene terephthalate of the present invention obtained by the melt polymerization has an intrinsic viscosity of about 0.5 to 1.2 in o-chlorophenol at 25°C. Next, it is solidified by cooling and ground or pelletized. When a high degree of polymerization is to be achieved, it can be further subjected to solid phase polymerization depending on the purpose. The solid phase polymerization is effected by a publicly known method and the degree of polymerization can be adjusted to any desired level by appropriately controlling, for example, residence time and treating temperature.

If required, the modified polybutylene terephthalate resin of the present invention may be used as a composition prepared by adding one or more auxiliary components such as other thermoplastic resins, additives, organic fillers and inorganic fillers thereto during or after the polymerization. As examples of the thermoplastic resins to be used herein, polyester elastomers, polyester resins other than the one of the present invention, polyolefin resins, polystyrene resins, polyamide resins, polycarbonate, polyacetal, polyarylene oxide, polyarylene sulfide and fluororesins may be cited. As examples of the additives, publicly known ones including stabilizers such as UV absorbers and antioxidants, antistatic agents, flame retardants, flame retardant aids, colorants such as dyes and pigments, lubricants, plasticizers, lubricating agents, mold-releasing agents and nucleating agents may be cited. As examples of the inorganic fillers, glass fiber, milled glass fiber, glass beads, glass flakes, silica, alumina fiber, zirconia fiber, potassium titanate fiber, carbon fiber, carbon black, graphite, silicates such as calcium silicate, aluminum silicate, kaolin, talc and clay, metal oxides such as iron oxide, titanium oxide, zinc oxide, antimony oxide and alumina, carbonates and sulfates of metals such as calcium, magnesium and zinc, silicon carbide, silicon nitride and boron nitride may be cited. As examples of the organic fillers, high-melting aromatic polyester fibers, liquid-crystalline polyester fibers, aromatic polyamide fibers, fluororesin fibers and polyimide fibers may be cited.

When a resin is to be used as molded articles such as electric and electronic parts or automotive parts, flame retardancy is frequently needed due to the service environment. In such a case, it is frequently required to add a flame retardant or a flame retardant aid to the resin as an essential component. As the flame retardant, publicly known halogen-containing compounds such as brominated polycarbonate, brominated epoxy compounds, brominated diphenyl and brominated diphenyl ether can be used. As the flame retardant aid, antimony compounds such as antimony trioxide, antinomy pentaoxide and antimony halides and metal compounds containing zinc or bismuth and clay silicates such as asbestos can be used. Further, it is preferable to use stabilizers such as an antioxidant in a suitable amount, since the effects of the present invention can be improved thereby.

The modified PBT resin according to the present invention or its composition is applicable to various molding methods, for example, injection molding, extrusion molding, blow molding, compression molding and vacuum molding. It can be processed into various molded articles, films and sheets and employed for various purposes.

The modified polybutylene terephthalate resin prepared in accordance with the present invention has good physicochemical properties, is particularly excellent in stability in melt-molding, little gives decomposition sublimate and little generates gas such as tetrahydrofuran in high-temperature service. It can be suitably applied to electrical and electronic parts such as relay, switch and connector without causing contamination at a metal contact or corrosion. Also it can be suitably applied to containers for food and cosmetics and packaging films without contaminating the contents.

### [Examples]

To further illustrate the present invention in greater detail, and not by way of limitation, the following Examples will be given.

The properties of resin products were evaluated by the following methods.

### (1) Generated gas and measurement of the amount of the gas

A tensile test piece of ASTM No. 1 was prepared under definite conditions by using an injection molding machine and ground in such a manner as to give a definite particle size to thereby give a sample. 5 g of the sample was allowed to stand in a head space (20 ml) at 140°C for 2 hours. Then the amount of the gas thus generated was measured by gas chromatography under the conditions as specified below. Based on the weight of the sample, the amount of the gas thus generated was expressed in ppm.

| | |
|---|---|
| Device | Yokogawa-Hewlett-Packard HP5890A. |
| Column | HR-1701, |
| | 0.32 mm (diameter) × 30 m. |
| Column temp. | 50°C (1 min) → 5°C/min → 250°C (1 min). |
| Detector | FID. |

### (2) Measurement of melt-heating loss

In a thermogravimetry device (Perkin-Elmer, TGA-7), 10 mg of the sample cut from a pellet was melt-heated in a nitrogen flow atmosphere at 260°C. Then the weight loss for a period of 10 minutes (from 5 to 15 minutes after the initiation of the melt-heating) was determined.

### (3) Evaluation of mechanical strength

The Izod impact strength (on the notched side) was measured in accordance with ASTM D 256.

### Examples 1 to 3 and Comparative Examples 1 and 2

A reaction vessel equipped with a stirrer and a distillation column was thoroughly purged with nitrogen. Then 246 parts by weight of dimethyl terephthalate (DMT), 145 parts by weight of 1,4-butanediol (1,4 BD), the compound of the formula (I-a) in an amount as specified in Table 1 and 0.16 part by weight of titanium tetrabutoxide employed as a catalyst were introduced thereinto and subjected to transesterification. The reaction temperature was gradually elevated while distilling off the methanol formed as a by-product. When the amount of the distilled methanol exceeded 88% by weight of the theoretical amount, the temperature of the reaction mixture was elevated to 200°C. Then it was transferred into another reaction vessel. The pressure was reduced to 0.5 Torr within 1 hour while the reaction temperature was elevated to 250°C at the same time. After stirring the reaction mixture under these conditions for 1.5 hours, the molten matter was extruded as strands via a discharge port. These strands were cooled with water and passed through a hot air stream to thereby eliminate water adhering thereto. Thus a modified PBT resin in the form of pellets was obtained.

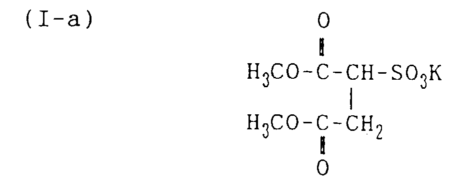

The intrinsic viscosity of the polyester thus obtained was measured in o-chlorophenol at 25°C and the above-mentioned properties thereof were further evaluated. It was proved that the gas generated from the resin comprised 1-butene, tetrahydrofuran, 3-butene-1-ol, etc. Table 1 shows the results. For comparison, a sample comprising no aromatic sulfonic acid compound (Comparative Example 1) and another sample comprising I-a in an amount outside the range specified in the present invention (Comparative Example 2) were similarly evaluated. These results are also given in Table 1. Small white particles were observed in the polyester obtained in Comparative Example 2.

### Examples 4 to 7 and Comparative Examples 3 and 4

Modified PBT resins were obtained by effecting melt polymerization in the same manner as the one described in Example 2, except that the compound of the formula (I-a) employed in Example 2 was replaced by the compounds represented by the following formulae (I-b), (I-c), (II-d) and (II-e) each in a definite amount (0.1 mole% based on DMT). Table 2 shows the result. For comparison, samples prepared by using the compounds (I'-f) and (I'-g) as shown below, which are different in structure from the compound represented by the general formula (I) or (II), were similarly evaluated. The results are also given in Table 2.

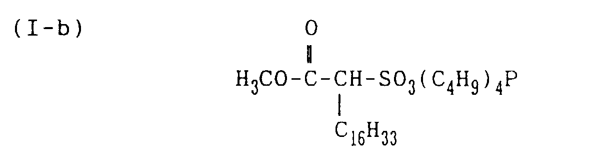

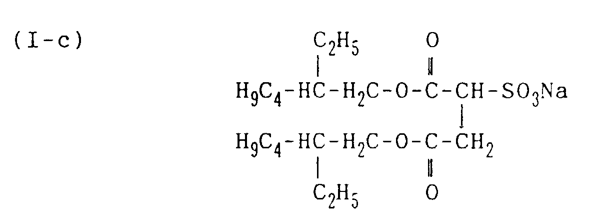

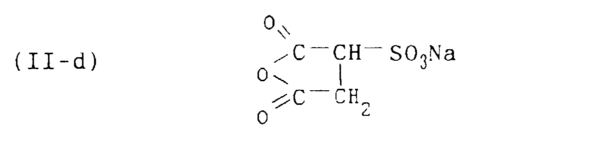

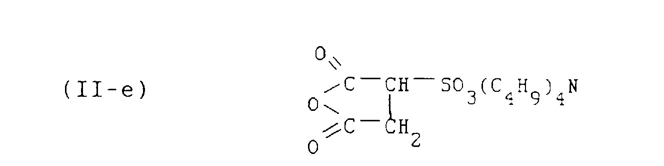

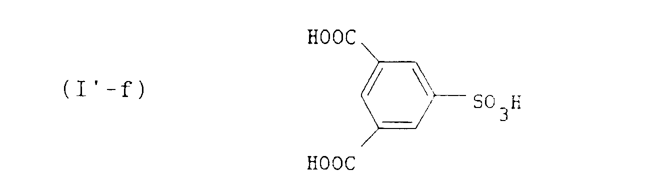

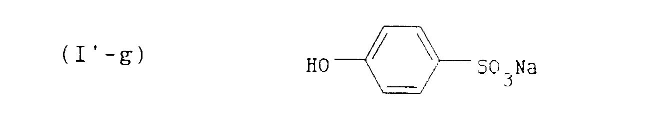

### Examples 8 and 9

Evaluation was made under the same conditions as those specified in Example 2 but varying the point for adding the compound of the formula (I-a). Table 3 shows the results.

### Examples 10 and 11 and Comparative Examples 5 and 6

Copolyesters were obtained by effecting melt polymerization in the same manner as the one described in Example 2, except that a part (10 mole%) of DMT was replaced by dimethyl isophthalate (DMI) (Example 10), or a part (2.5 mole%) of 1,4 BD was replaced by 2,2-bis[3,5-dibromo-4-(2-hydroxyethoxy)phenyl]propane (BrEBPA) (Example 11). Table 4 shows the results. For comparison, samples free from any aromatic sulfonic acid compound (Comparative Examples 5 and 6) were evaluated in the same manner. The results are given in Table 4 too.

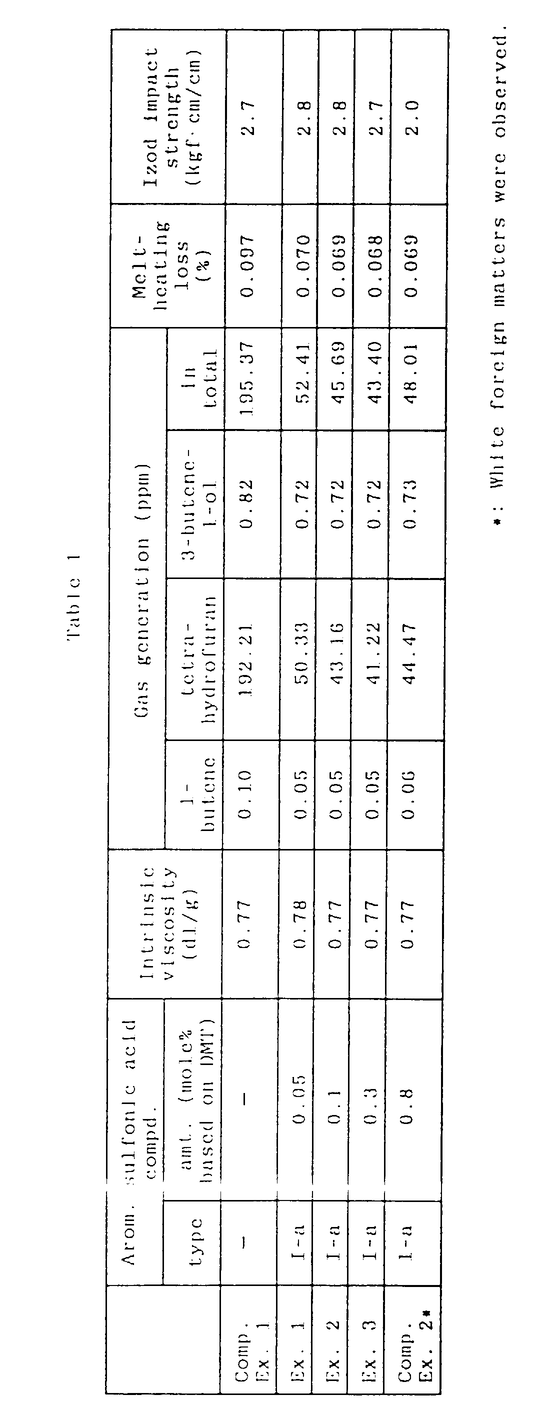

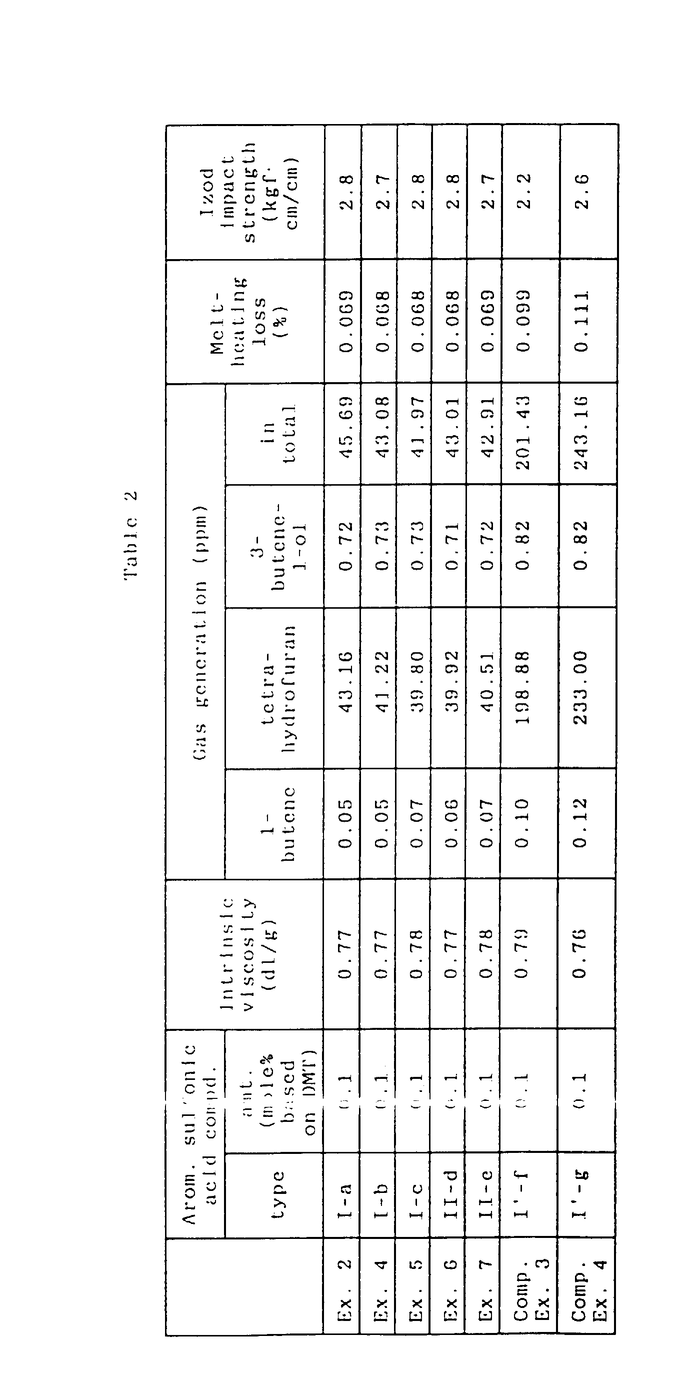

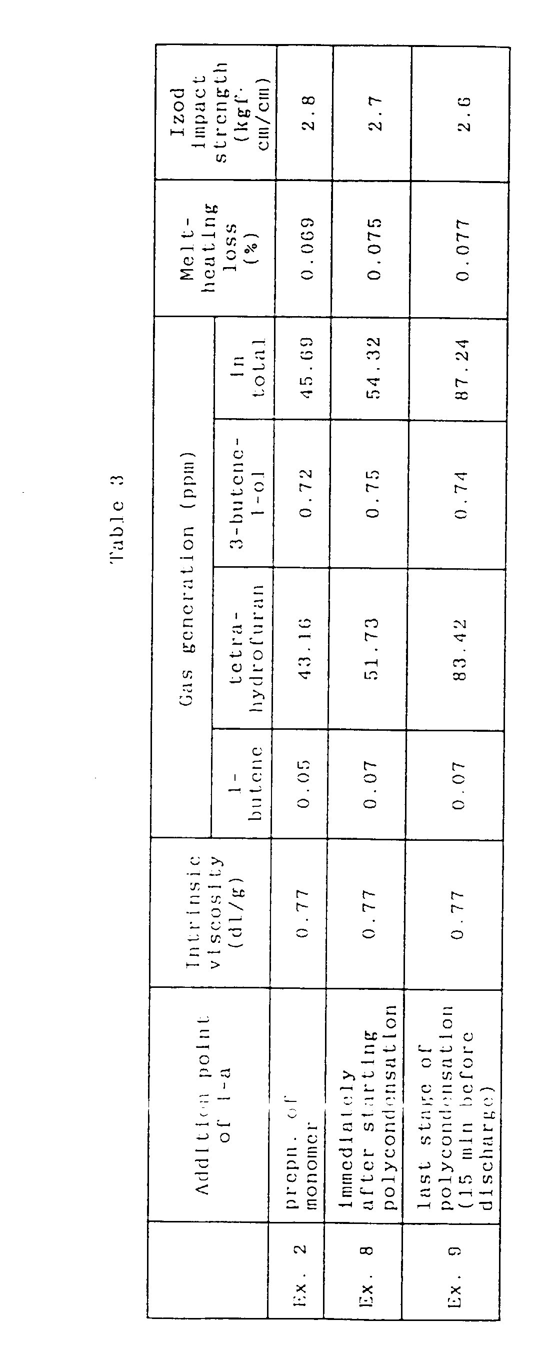

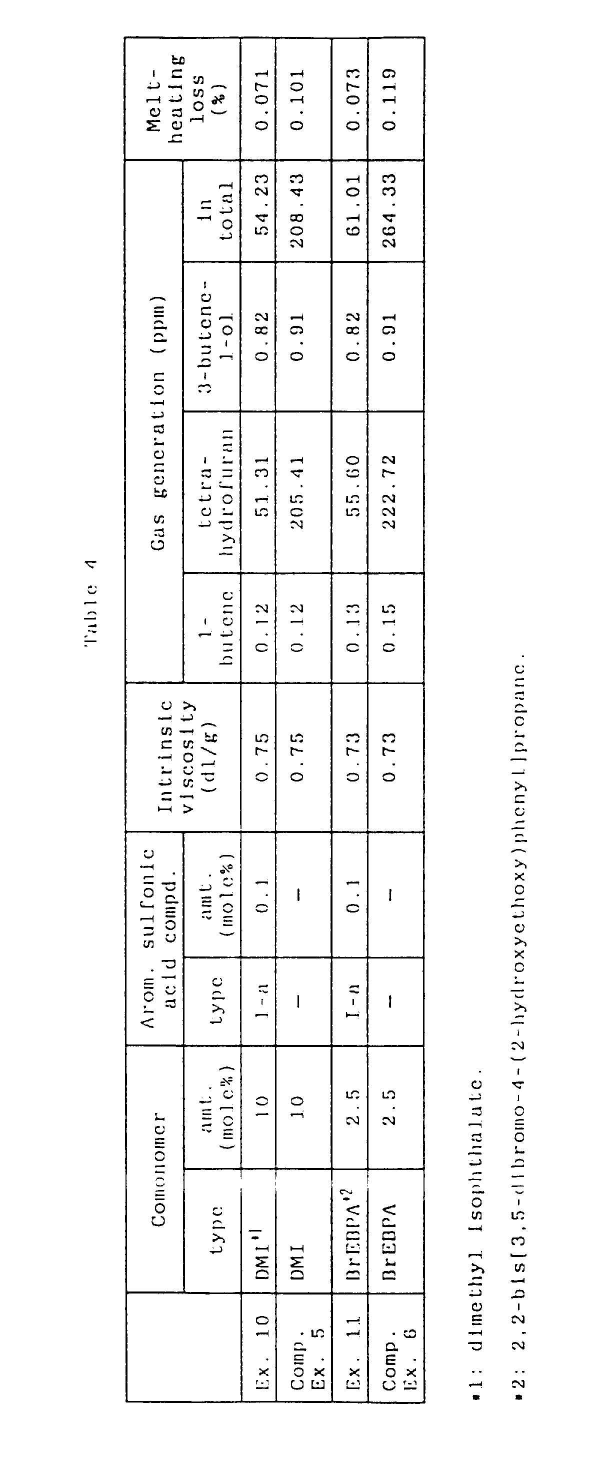

## Claims

1. A process for the preparation of a modified polybutylene terephthalate resin by conducting the esterification or transesterification of an acid component comprising terephthalic acid or a lower alcohol ester thereof as the main component with a diol component comprising 1,4-butanediol as the main component and polycondensing the product of esterification or transesterification, characterized by adding 0.001 to 0.5 mole% (based on the acid component) of at least one compound represented by the following general formula (I) or (II) before the completion of the polycondensation: 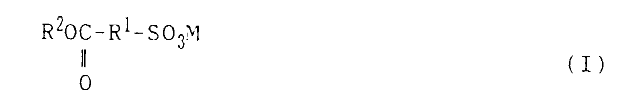 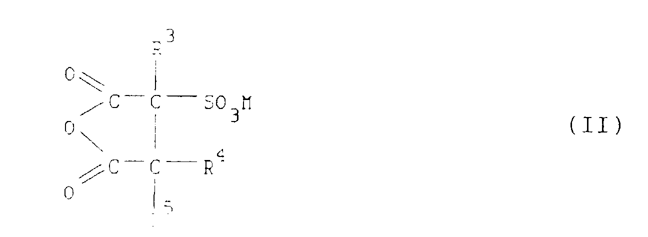 wherein R¹ is an alkylene group having 1 to 30 carbon atoms, an alkenylene group having 2 to 30 carbon atoms or a divalent group represented by the following general formula (III); R², R³, R⁴ and R⁵ may be the same or different from each other and are each one selected from among hydrogen atom and alkyl groups having 1 to 30 carbon atoms; and M is a group or element selected from among tetraalkylphosphonium, tetraalkylammonium, lithium, sodium, potassium, barium and calcium, 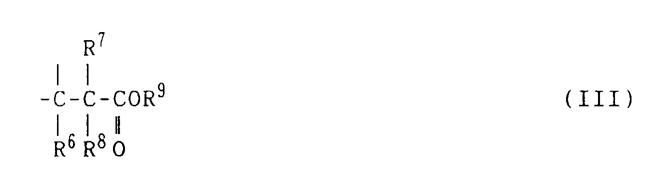 wherein R⁶, R⁷, R⁸ and R⁹ may be the same or different from each other and are each one selected from among hydrogen and alkyl groups having 1 to 30 carbon atoms.

2. A process for the preparation of a modified polybutylene terephthalate resin as set forth in claim 1, wherein the addition of a compound represented by the general formula (I) or (II) is conducted before 90 mole % of the theoretical amount of water formed by the esterification or the lower alcohol formed by the transesterification is distilled out of the reaction system.

3. A molded article made from a modified polybutylene terephthalate resin prepared by the process as set forth in claim 1 or a composition containing the resin.

## Patentansprüche

1. Verfahren zur Herstellung eines modifizierten Polybutylenterephthalat-Harzes durch Durchführung der Veresterung oder Umesterung einer Säure-Komponente, umfassend Terephthalsäure oder einen Niederalkohol-Ester derselben als Hauptkomponente, mit einer Diol-Komponente, umfassend 1,4-Butandiol als Hauptkomponente, und Polykondensation des Produkts der Veresterung oder Umesterung, dadurch gekennzeichnet, daß man vor der Vervollständigung der Polykondensation 0,001 bis 0,5 Mol-% (bezogen auf die Säurekomponente) wenigstens einer Verbindung zugibt, dargestellt durch die folgenden allgemeinen Formeln (I) oder (II): 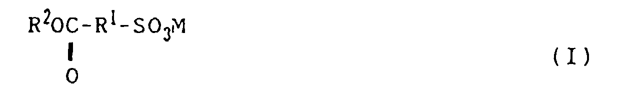 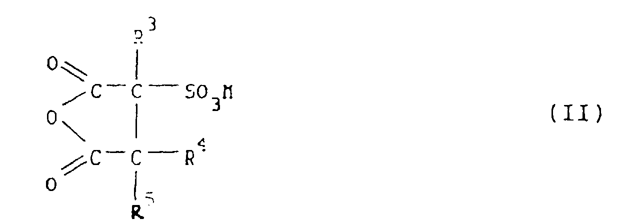 worin R¹ eine Alkylengruppe mit 1 bis 30 Kohlenstoffatomen, eine Alkenylengruppe mit 2 bis 30 Kohlenstoffatomen oder eine zweiwertige Gruppe, dargestellt durch die folgende allgemeine Formel (III), ist; R², R³, R⁴ und R⁵ gleich oder voneinander verschieden sein können und jeweils aus einem Wasserstoffatom und Alkylgruppen mit 1 bis 30 Kohlenstoffatomen ausgewählt sind; und M eine Gruppe oder ein Element ist, das aus Tetraalkylphosphonium, Tetraalkylammonium, Lithium, Natrium, Kalium, Barium und Calcium ausgewählt ist; 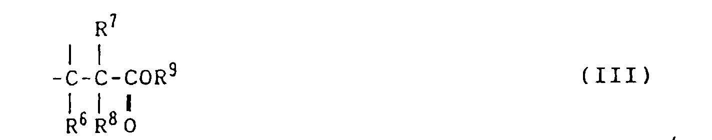 worin R⁶, R⁷, R⁸ und R⁹ gleich oder voneinander verschieden sein können und jeweils aus Wasserstoff und Alkylgruppen mit 1 bis 30 Kohlenstoffatomen ausgewählt sind.

2. Verfahren zur Herstellung eines modifizierten Polybutylenterephthalat-Harzes gemäß Anspruch 1, worin die Zugabe einer Verbindung, dargestellt durch die allgemeinen Formeln (I) oder (II), durchgeführt wird, bevor 90 Mol-% der theoretischen Menge des Wassers, das durch die Veresterung oder des durch die Umesterung gebildeten Niederalkohols gebildet wird, aus dem Reaktionssystem abdestilliert sind.

3. Aus einem modifizierten Polybutylenterephthalat-Harz hergestellter, geformter Gegenstand, der durch das Verfahren gemäß Anspruch 1 hergestellt wird, oder eine das Harz enthaltende Zusammensetzung.

## Revendications

1. Procédé pour la préparation d'une résine de téréphtalate de polybutylène modifiée en effectuant l'estérification ou la transestérification d'un composant acide comprenant de l'acide téréphtalique ou un ester d'alcool inférieur de celui-ci en tant que constituant principal avec un constituant diol comprenant le 1,4-butanediol en tant que composant principal, et en polycondensant le produit d'estérification ou de transestérification, caractérisé par l'addition de 0,001 à 0,5 % en moles (sur la base du constituant acide) d'au moins un composé représenté par la formule générale (I) ou (II) suivante avant la fin de la polycondensation : 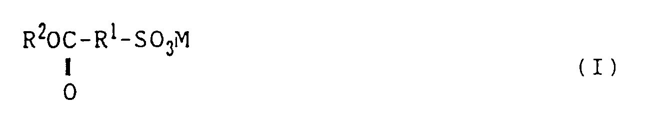 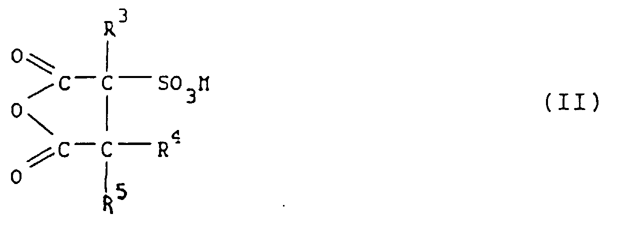 où R¹ est un groupe alkylène ayant 1 à 30 atomes de carbone, un groupe alcénylène ayant 2 à 30 atomes de carbone ou un groupe divalent représenté par la formule générale (III) suivante ; R², R³, R⁴ et R⁵ peuvent être identiques ou différents les uns des autres et sont chacun choisis parmi l'atome d'hydrogène et les groupes alkyles ayant 1 à 30 atomes de carbone ; et M est un groupe ou élément choisi parmi un tétraalkylphosphonium, un tétraalkylammonium, le lithium, le sodium, le potassium, le baryum et le calcium, 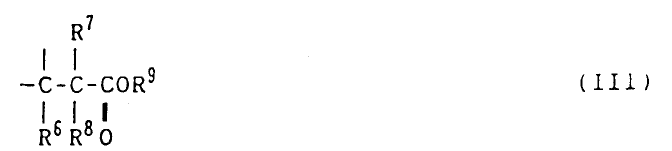 où R⁶, R⁷, R⁸ et R⁹ peuvent être identiques ou différents les uns des autres et sont chacun choisis parmi l'hydrogène et les groupes alkyles ayant 1 à 30 atomes de carbone.

2. Procédé pour la préparation d'une résine de téréphtalate de polybutylène modifiée selon la revendication 1, dans lequel l'addition d'un composé représenté par la formule générale (I) ou (II) est effectuée avant que 90 % en moles de la quantité théorique d'eau formée par l'estérification ou d'alcool inférieur formé par la transestérification soient distillés du système réactionnel.

3. Article moulé préparé à partir d'une résine de téréphtalate de polybutylène modifiée préparée par le procédé selon la revendication 1 ou d'une composition contenant la résine.
